# EUROPÄISCHE PATENTANMELDUNG

(11) **EP 1 065 424 A1**
(43) Veröffentlichungstag der Anmeldung: **03.01.2001**
(21) Anmeldenummer: 00113776.9
(22) Anmeldetag: 29.06.2000
(51) Int. Cl.: F16L 21/08, F16L 37/248

(54) **Rohrverbindung in Form einer Steckmuffenverbindung**

(30) Priorität: 30.06.1999 DE 19930023
(71) Anmelder: Vahlbrauk, Wolfgang Dipl.-Ing., 37581 Bad Gandersheim (DE)
(72) Erfinder: Vahlbrauk, Wolfgang Dipl.-Ing., 37581 Bad Gandersheim (DE)
(74) Vertreter: Lins, Edgar, Dipl.-Phys. Dr.jur.

(57) **Zusammenfassung**

Eine Rohrverbindung in Form einer Steckmuffenverbindung, bei der ein Ende eines ersten Rohres (1) in ein einen größeren Durchmesser aufweisendes Ende eines zweiten Rohres (2) abgedichtet einsteckbar ist, wobei die Steckmuffenverbindung durch ein außen auf die Enden der beiden Rohre (1, 2) aufgebrachtes Sicherungselement (3) gegen ein axiales Auseinandergleiten gesichert ist, läßt sich gegen ein axiales Auseinandergleiten der verbundenen Rohrenden ohne das Risiko einer Beschädigung der Oberflächen der möglicherweise oberflächenbehandelten Rohre (1,2) sichern und dennoch in jeder beliebigen Drehlage zueinander dadurch montieren, daß als Sicherungselement auf die Steckmuffenverbindung eine Sicherungshülse (3) aufgeschoben ist, mit der die Enden der beiden Rohre (1, 2) jeweils in axialer Richtung formschlüssig verbindbar sind, daß die Sicherungshülse (3) aus zwei ineinander greifenden Hülsenteilen (6, 7) besteht, die mittels radialer Anschläge (8, 9) gegeneinander drehbar, jedoch gegen ein Auseinanderziehen gesichert sind und daß in dem Hülsenteil (6) mit dem größeren Durchmesser ein Formteil (14) gelagert ist, das bei der Herstellung der formschlüssigen Verbindung zwischen Sicherungshülse (3) und den Enden der beiden Rohre (1, 2) axial beaufschlagbar ist und dadurch eine Wirkverbindung mit dem Anschlag (9) des Hülsenteils (7) mit dem kleineren Durchmesser zur zumindest reibschlüssigen Festlegung der relativen Drehlage der beiden Hülsenteile (6, 7) zueinander herstellt.

## Beschreibung

Die Erfindung betrifft eine Rohrverbindung in Form einer Steckmuffenverbindung, bei der ein Ende eines ersten Rohres in ein einen größeren Durchmesser aufweisendes Ende eines zweiten Rohres abgedichtet einsteckbar ist, wobei die Steckmuffenverbindung durch ein außen auf die Enden der beiden Rohre aufgebrachtes Sicherungselement gegen ein axiales Auseinandergleiten gesichert ist.

Bekannte Rohrverbindungen dieser Art weisen beispielsweise eine Sicherungsschelle auf, die aus zwei mit radialen Flanschansätzen versehenen Hälften bestehen, die durch Schrauben miteinander verbindbar sind. Die Form der Sicherungsschelle ist so ausgebildet, daß das den größeren Durchmesser aufweisende Ende des zweiten Rohres formschlüssig übergriffen wird, während das eingeschobene Rohrende im wesentlichen reibschlüssig durch das Anziehen der Schrauben gehalten wird.

Die bekannten Rohrverbindungen dieser Art erfordern eine relativ aufwendige Montage und sind nachteilig, wenn die zu verbindenden Rohre oberflächenbehandelt, beispielsweise verzinkt, sind. Durch den im wesentlichen durch den Rand der Schellenhälften ausgeübten Halbschluß entsteht eine krallenartige Verzahnung, die die Oberflächenbehandlung beschädigen kann.

Zur Lösung des Problems, eine Rohrverbindung zu ermöglichen, die eine hohe Sicherheit gegen ein axiales Auseinandergleiten der verbundenen Rohrenden bietet, jedoch auch für oberflächenbehandelte Rohre ohne das Risiko einer Beschädigung der Oberfläche verwendbar ist, wird in der nicht vorveröffentlichten älteren deutschen Patentanmeldung 198 08 980.5 vorgeschlagen, daß die Enden der beiden Rohre mit bolzenartigen Vorsprüngen versehen sind und daß das Sicherungselement als eine auf die Steckmuffenverbindung aufgeschobene Sicherungshülse ausgebildet ist, die an ihren beiden offenen Enden bajonettverschlußartige Führungen aufweist, über die die Enden der beiden Rohre mittels der bolzenartigen Vorsprünge jeweils in axialer Richtung formschlüssig mit der Sicherungshülse verbindbar sind. Da die beiden Rohrenden in axialer Richtung formschlüssig mit der Sicherungshülse verbunden werden, so daß die Sicherung gegen axiales Auseinandergleiten für beide Rohrenden durch Formschluß erfolgt, kann jeder erhöhte Druck der Sicherungshülse auf die Oberfläche der Enden der beiden Rohre entfallen, so daß eine etwaige Oberflächenbehandlung der Rohrenden keiner Beschädigungsgefahr durch die Sicherungshülse ausgesetzt ist. Die so gebildete Rohrverbindung läßt sich außerordentlich einfach montieren, da lediglich die Sicherungshülse auf einem der beiden Rohrenden durch den Bajonettverschluß befestigt werden muß und diese Anordnung mit dem anderen Rohrende zur Bildung der Steckmuffenverbindung zusammengesteckt wird, wobei darauf zu achten ist, daß die bolzenartige Erhöhung des anderen Rohrendes in die zugehörige bajonettverschlußartige Führung der Sicherungshülse eingeführt wird, um so auf das andere Ende in axialer Richtung formschlüssig mit der Sicherungshülse zu verbinden.

Der vorliegenden Erfindung liegt die Problemstellung zugrunde, eine Rohrverbindung, bei der eine axiale Sicherung mit Hilfe einer formschlüssig mit den beiden Rohrenden verbindbaren Sicherungshülse erfolgt dahingehend zu verbessern, daß auch eine sinnvolle Verbindung zwischen Rohren möglich ist, von denen wenigstens eins durch Krümmung abgewinkelt ausgebildet ist. Die formschlüssige Verbindung der Rohrenden mit der Sicherungshülse führt regelmäßig zu einer radial definierten Position der Rohrenden, wodurch vielen Montagegegebenheiten durch vorproduzierte Standard-Rohrstücke nicht Rechnung getragen werden kann, so daß hierfür spezielle Rohrenden hergestellt oder auf Vorrat gehalten werden müssen. Ausgehend von der genannten Problemstellung ist erfindungsgemäß eine Rohrverbindung der eingangs erwähnten Art dadurch gekennzeichnet, daß als Sicherungselement auf die Steckmuffenverbindung eine Sicherungshülse aufgeschoben ist, mit der die Enden der beiden Rohre jeweils in axialer Richtung formschlüssig verbindbar sind, daß die Sicherungshülse aus zwei ineinander greifenden Hülsenteilen besteht, die mittels radialer Anschläge gegeneinander drehbar, jedoch gegen ein Auseinanderziehen gesichert sind und daß in dem Hülsenteil mit dem größeren Durchmesser ein Formteil gelagert ist, das bei der Herstellung der formschlüssigen Verbindung zwischen der Sicherungshülse und den Enden der beiden Rohre axial beaufschlagbar ist und dadurch eine Wirkverbindung mit dem Anschlag des Hülsenteils mit dem kleineren Durchmesser zur zumindest reibschlüssigen Festlegung der relativen Drehlage der beiden Hülsenteile zueinander herstellen.

Bei der erfindungsgemäßen Rohrverbindung sind die beiden Rohre aufgrund der Verdrehbarkeit der beiden Hülsenteile der Sicherungshülse in beliebiger Position zueinander drehbar, so daß beispielsweise ein abgewinkeltes Rohr in eine im Einzelfall gewünschte Einbaulage ausgerichtet werden kann. Die Herstellung des Formschlusses ist erfindungsgemäß mit einer Axialbewegung verbunden, durch die das in dem Hülsenteil mit dem größeren Durchmesser gelagerte Formteil axial beaufschlagt wird. Durch die axiale Beaufschlagung wird eine Wirkverbindung mit dem in das Hülsenteil mit dem größeren Durchmesser hineinragende Hülsenteil mit dem kleineren Durchmesser hergestellt, wodurch die Drehbarkeit der beiden Hülsenteile zueinander durch Reibschluß oder durch Formschluß für praktische Anwendungsfälle unterbunden wird. Eine formschlüssige Fixierung der relativen Drehlage der beiden Hülsenteile zueinander wäre beispielsweise durch ein mit einer axialen Verzahnung versehenes Formteil denkbar, wenn der Anschlag des Hülsenteils mit dem kleineren Durchmesser eine entsprechende Verzahnung aufweist und die beiden Verzahnungen durch die axiale Bewegung bei der Herstellung des Formschlusses miteinander in Eingriff geraten. Eine reibschlüssige Festlegung der relativen Drehlage der beiden Hülsenteile zueinander ist durch ein elastisches Ringformteil möglich, das durch die axiale Beaufschlagung elastisch verformbar ist.

In einer bevorzugten Ausführungsform der Erfindung erfolgt die axiale Beaufschlagung des Formteils mittels des den größeren Durchmesser aufweisenden Endes des zweiten Rohres.

Besonders bevorzugt ist dabei, wenn eine Formdichtung zwischen den Rohrenden mit einem Endstück axial aus dem freien Ende des zweiten Rohres mit dem größeren Durchmesser hinausragt und von der Sicherungshülse im montierten Zustand übergriffen wird und wenn das Formteil an der Formdichtung anliegt. Dabei ist vorzugsweise das Endstück abgeschrägt ausgebildet, so daß das Formteil mit einer komplementären Form an dem Endstück anliegt. Durch das elastische Endstück der Formdichtung und/oder das elastische Ringformteil wird nicht nur die Festlegung der Drehlage der beiden Hülsenteile bewirkt oder unterstützt sondern darüber hinaus ein Toleranzausgleich möglich, so daß die Anbringung der Elemente für die Herstellung des Formschlusses zwischen den Rohrenden und der Sicherungshülse und die Fertigung der Sicherungshülse selbst nicht mit einer übermäßigen Präzison erfolgen muß sondern mit herkömmlichen Fertigungsmethoden möglich ist.

Zweckmäßigerweise sind die Durchmesser der beiden Hülsenteile an die verschiedenen Außendurchmesser der Enden der beiden Rohre angepaßt. Dabei wird zweckmäßigerweise mittels ringförmiger radialer Anschläge beider Hülsenteile die Verbindung der beiden Hülsenteile hergestellt, so daß sich im Bereich der ringförmigen radialen Anschläge eine stufenförmige Durchmesserveränderung der aus den beiden Teilen gebildeten Sicherungshülse ergibt.

Die Herstellung der formschlüssigen Verbindung erfolgt zweckmäßigerweise dadurch, daß die Enden der beiden Rohre mit bolzenartigen Vorsprüngen versehen sind und daß in den beiden Hülsenteilen der Sicherungshülse bajonettverschlußartige Führungen vorgesehen sind, über die die Enden der beiden Rohre jeweils in axialer Richtung formschlüssig mit der Sicherungshülse verbindbar sind. Aus Symmetriegründen ist es zweckmäßig, wenn die Verbindung zwischen Sicherungshülse und dem Ende eines Rohres jeweils durch zwei bolzenartige Vorsprünge und zwei bajonettverschlußartige Führungen hergestellt ist.

Die bajonettverschlußartigen Führungen an den beiden Enden der Sicherungshülse können gegensinnig angeordnet sein, um den Verschluß bzw. das Lösen des Verschlusses zwischen Sicherungshülse und Rohrenden auf beiden Seiten durch dieselbe relative Drehung der Rohrenden zueinander bewirken zu können.

Sind hingegen die bajonettverschlußartigen Führungen an beiden Enden der Sicherungshülse gleichsinnig angeordnet, muß die Sicherungshülse für das Lösen auf beiden Enden in derselben Richtung gedreht werden. Hierdurch wird eine höhere Sicherheit gegen ein unbeabsichtigtes Lösen des Formschlusses zwischen Sicherungshülse und Rohrende erreicht.

Die Erfindung soll im folgenden anhand eines in der Zeichnung dargestellten Ausführungsbeispiels näher erläutert werden. Es zeigen:
- Figur 1 -: einen Längsschnitt durch eine erfindungsgemäße Rohrverbindung
- Figur 2 -: einen Längsschnitt durch ein Hülsenteil mit einem größeren Durchmesser
- Figur 3 -: eine Draufsicht auf ein Ende des Hülsenteils gemäß Figur 2
- Figur 4 -: einen Längsschnitt durch ein Hülsenteil mit einem kleineren Durchmesser
- Figur 5 -: eine Draufsicht auf ein Ende des Hülsenteils gemäß Figur 4
- Figur 6 -: einen Schnitt durch ein ringförmiges elastisches Formteil.

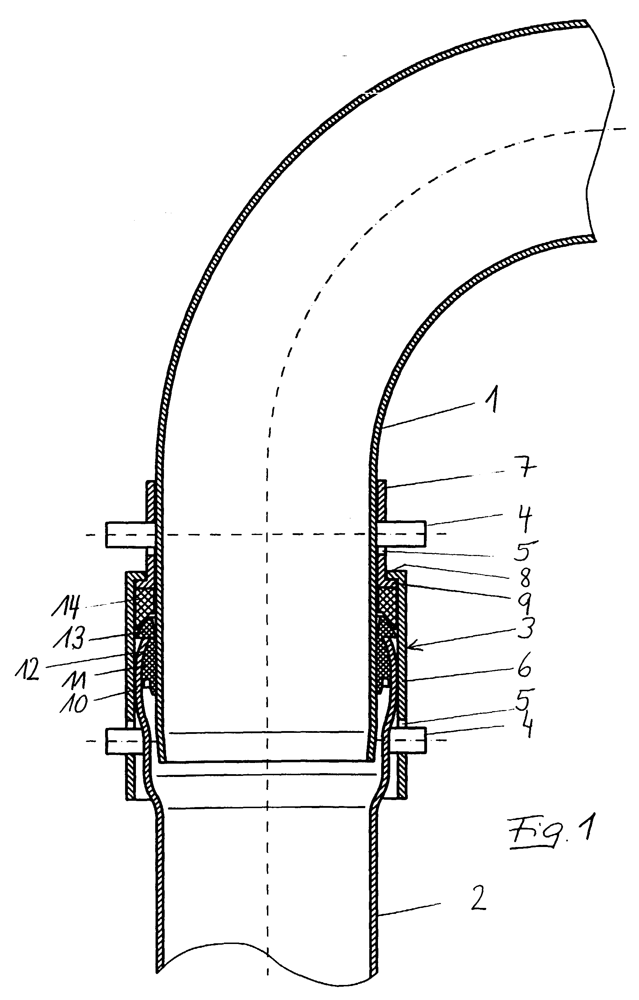

Figur 1 läßt eine Rohrverbindung in Form einer Steckmuffenverbindung erkennen, bei der ein Ende eines ersten Rohres 1, das hier als gekrümmtes Rohrstück ausgebildet ist, in einem Bereich der Rohrverbindung aufgeweitetes Ende eines zweiten Rohres 2 eingesteckt ist. Die zusammengesteckten Enden der Rohre 1, 2 werden durch eine Sicherungshülse 3 gegen ein axiales Auseinandergleiten gesichert. Hierzu sind auf die Enden der beiden Rohre 1, 2 jeweils bolzenartige Vorsprünge 4 in Form von aufgeschweißten Bolzen aufgebracht. Diese wirken mit jeweils einer bajonettverschlußartigen Führung 5 zur Herstellung einer in axialer Richtung formschlüssigen Verbindung zwischen den Rohren 1, 2 und der Sicherungshülse 3 zusammen.

Die Sicherungshülse 3 besteht aus einem Hülsenteil 6 mit einem größeren Durchmesser und einem Hülsenteil 7 mit einem kleineren Durchmesser. Der Durchmesser des größeren Hülsenteils 6 ist an den Außendurchmesser des im Bereich der Steckmuffenverbindung aufgeweiteten Endes des Rohres 2 angepaßt, während der Durchmesser des kleineren Hülsenteils 7 an den gegenüber der Nennweite unveränderten Durchmesser am Ende des ersten Rohres 1 angepaßt ist.

Die beiden Hülsenteile 6, 7 greifen dadurch ineinander, daß das größere Hülsenteil 6 einen nach innen gerichteten ringförmigen Anschlag 8 und das kleinere Hülsenteil 7 einen entsprechenden nach außen gerichteten ringförmigen Anschlag 9 aufweist. Die beiden ringförmigen Anschläge 8, 9 verhindern ein axiales Auseinanderziehen der ineinander gesteckten Hülsenteile 6, 7.

Das aufgeweitete Ende des zweiten Rohres 2 ist mit einer Ringswulst-Ausbauchung 10 versehen, wie sie früher für eine formschlüssige Verbindung mit einer entsprechend geformten Sicherungsschelle erforderlich war. Bei der hier dargestellten Ausführungsform hat die Ringswulst-Ausbauchung 10 die Funktion, einen sich an der Innenwand der Ringwulst-Ausbauchung 10 erstreckenden Teil 11 einer ringförmigen Dichtung 12 aufzunehmen. Die ringförmige Dichtung 12 ragt mit einem Endstück 13 axial über das Ende des zweiten Rohres 2 hinaus, so daß das Endstück 13 die Einschubbewegung für die ringförmige Dichtung 12 in das Innere des Endes des zweiten Rohres 2 begrenzt. An dem Endstück 13 schließt sich in axialer Richtung ein ringförmiges Formteil 14 an, das einerseits mit einer zum abgeschrägten Endstück 13 komplementären Form an dem Endstück 13 und andererseits mit einem flachen Ende an dem ringförmigen Anschlag 9 des Hülsenteils 7 anliegt.

In dem in Figur 1 dargestellten montierten Zustand wird durch die Führung 5 eine axiale Vorspannung erzeugt, durch die das elastisch ausgebildete ringförmige Formteil 14 in axialer Richtung elastisch verformt wird. Diese Verformung erlaubt einerseits einen gewissen Toleranzausgleich und bewirkt andererseits eine reibschlüssige Festlegung der Drehposition des kleineren Hülsenteils 7 relativ zu dem größeren Hülsenteil 6 aufgrund der durch die elastische Rückstellkraft des Formteils 14 bewirkten axialen Vorspannung auf den ringförmigen Anschlag 9, durch die die beiden ringförmigen Anschläge 8, 9 aufeinander gedrückt werden und so eine Verdrehung der Hülsenteile 6, 7 zueinander zumindest erschwert wird.

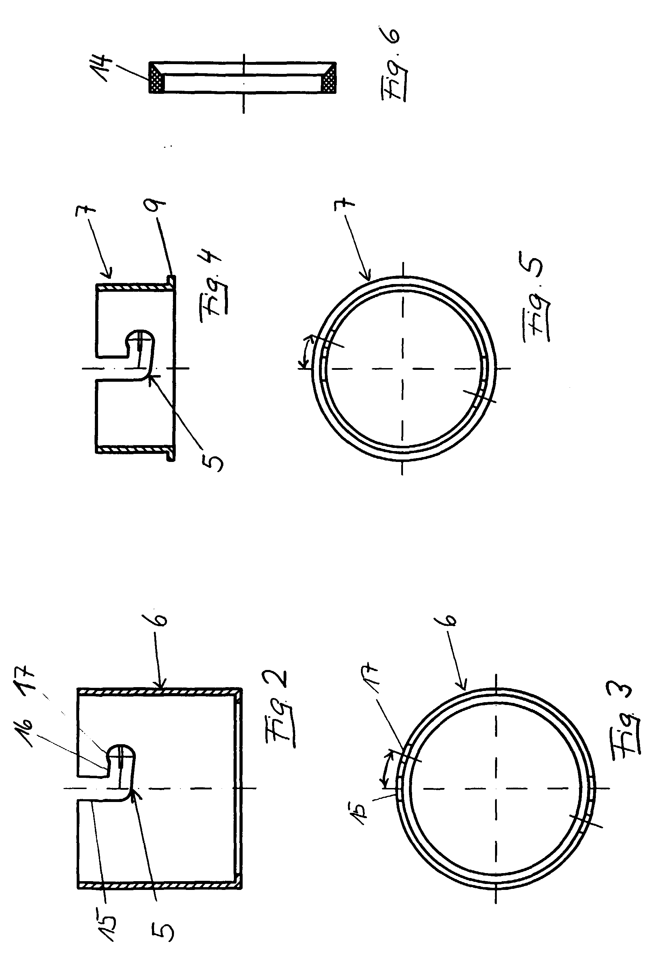

Figur 2 zeigt das größere Hülsenteil 6 und verdeutlicht, daß die bajonettverschlußartige Führung 5 in üblicherweise mit einem in Rohrlängsrichtung gerichteten Führungsstück 15 und einem in Rohrumfangsrichtung gerichteten Führungsstück 16 versehen ist, das an seinem Ende eine geringfügige Hinterschneidung 17 zur sicheren Aufnahme des zugehörigen Bolzens 4 aufweisen.

Figur 3 läßt erkennen, daß zwischen dem Einführen des bolzenartigen Vorsprungs 4 in das in Rohrlängsrichtung gerichtete Führungsstück 15 und die Verriegelungsstellung mit der Hinterschneidung 17 eine Drehbewegung von ca. 20° erforderlich ist.

Figuren 4 und 5 zeigen in analoger Weise den Aufbau des kleineren Hülsenteils 7 mit seinem ringförmigen Anschlag 9 und der in gleicher Weise aufgebauten bajonettverschlußartigen Führung 5.

Figur 6 zeigt das elastische ringförmige Formteil 14, das an einem Ende eine komplementär zur Verjüngung des Endstücks 13 der Dichtung 12 ausgebildete Abschrägung aufweist.

Es ist ohne weiteres erkennbar, daß der Aufbau der Sicherungshülse 3 den beiden Hülsenteilen 6, 7 vor der endgültigen Verbindung der Sicherungshülse 3 mit beiden Rohren 1, 2 eine relative Verdrehung der beiden Rohre 1, 2 zueinander ohne weiteres möglich ist, daß die ringförmigen Anschläge 8, 9 der beiden Hülsenteile 6, 7 ohne weiteres eine relative Drehbewegung erlauben. Erst nach der Herstellung des Formschlusses der Sicherungshülse mit beiden Rohren 1, 2 wird die relative Drehbeweglichkeit der beiden Hülsenteile 6, 7 durch die Wirkung des axial elastisch verformten Formteils 14 unterbunden. Hierfür ist - wie ohne weiteres erkennbar ist - Voraussetzung, daß die Position der bajonettverschlußartigen Führungen 5 und der bolzenartigen Vorsprünge 4 so gewählt wird, daß bei der Herstellung der bajonettverschlußartigen Verbindungen mit beiden Rohren 1, 2 eine axiale Vorspannung auf das elastische Formteil 14 und/oder das elastische Endstück 13 der ringförmigen Dichtung 12 ausgeübt wird.

## Patentansprüche

1. Rohrverbindung in Form einer Steckmuffenverbindung, bei der ein Ende eines ersten Rohres (1) in ein einen größeren Durchmesser aufweisendes Ende eines zweiten Rohres (2) abgedichtet einsteckbar ist, wobei die Steckmuffenverbindung durch ein außen auf die Enden der beiden Rohre (1, 2) aufgebrachtes Sicherungselement (3) gegen ein axiales Auseinandergleiten gesichert ist, **dadurch gekennzeichnet, daß** als Sicherungselement auf die Steckmuffenverbindung eine Sicherungshülse (3) aufgeschoben ist, mit der die Enden der beiden Rohre (1, 2) jeweils in axialer Richtung formschlüssig verbindbar sind, daß die Sicherungshülse (3) aus zwei ineinander greifenden Hülsenteilen (6, 7) besteht, die mittels radialer Anschläge (8, 9) gegeneinander drehbar, jedoch gegen ein Auseinanderziehen gesichert sind und daß in dem Hülsenteil (6) mit dem größeren Durchmesser ein Formteil (14) gelagert ist, das bei der Herstellung der formschlüssigen Verbindung zwischen Sicherungshülse (3) und den Enden der beiden Rohre (1, 2) axial beaufschlagbar ist und dadurch eine Wirkverbindung mit dem Anschlag (9) des Hülsenteils (7) mit dem kleineren Durchmesser zur zumindest reibschlüssigen Festlegung der relativen Drehlage der beiden Hülsenteile (6, 7) zueinander herstellt.

2. Rohrverbindung nach Anspruch 1, dadurch gekennzeichnet, daß das Formteil (14) ein elastisches Ringformteil ist, das durch die axiale Beaufschlagung elastisch verformbar ist.

3. Rohrverbindung nach Anspruch 1 oder 2, dadurch gekennzeichnet, daß die axiale Beaufschlagung des Formteils (14) mittels des den größeren Durchmesser aufweisenden Endes des zweiten Rohres (2) herstellbar ist.

4. Rohrverbindung nach einem der Ansprüche 1 bis 3, dadurch gekennzeichnet, daß eine Formdichtung (12) zwischen den Rohrenden mit einem Endstück (13) axial aus dem freien Ende des zweiten Rohres (2) hinausragt und von der Sicherungshülse (3) im montierten Zustand übergriffen ist und daß das Formteil (14) an der Formdichtung (12) anliegt.

5. Rohrverbindung nach Anspruch 4, dadurch gekennzeichnet, daß das Endstück (13) abgeschrägt ausgebildet ist und daß das Formteil (14) mit einer komplementären Form an dem Endstück (13) anliegt.

6. Rohrverbindung nach einem der Ansprüche 1 bis 5, dadurch gekennzeichnet, daß die Durchmesser der beiden Hülsenteile (6, 7) an die verschiedenen Außendurchmesser der Enden der beiden Rohre (1, 2) angepaßt sind.

7. Rohrverbindung nach einem der Ansprüche 1 bis 6, dadurch gekennzeichnet, daß mittels ringförmiger radialer Anschläge (8, 9) beider Hülsenteile (6, 7) die Verbindung der beiden Hülsenteile (6, 7) hergestellt ist.

8. Rohrverbindung nach einem der Ansprüche 1 bis 7, dadurch gekennzeichnet, daß die Enden der beiden Rohre (1, 2) mit bolzenartigen Vorsprüngen (4) versehen sind und daß in den beiden Hülsenteilen (6, 7) der Sicherungshülse (3) bajonettverschlußartige Führungen (5) vorgesehen sind, über die die Enden der beiden Rohre (1, 2) jeweils in axialer Richtung formschlüssig mit der Sicherungshülse (3) verbindbar sind.

9. Rohrverbindung nach Anspruch 8, dadurch gekennzeichnet, daß die Verbindung zwischen Sicherungshülse (3) und dem Ende eines Rohres (1, 2) jeweils durch wenigstens zwei bolzenartige Vorsprünge (4) und zwei bajonettverschlußartigen Führungen (5) hergestellt ist.

10. Rohrverbindung nach Anspruch 8 oder 9, dadurch gekennzeichnet, daß die bajonettverschlußartigen Führungen (5) an den beiden Enden der Sicherungshülse (3) gegensinnig angeordnet sind.

11. Rohrverbindung nach Anspruch 8 oder 9, dadurch gekennzeichnet, daß die bajonettverschlußartigen Führungen (5) an den beiden Enden der Sicherungshülse (3) gleichsinnig angeordnet sind.

12. Rohrverbindung nach einem der Ansprüche 1 bis 11, dadurch gekennzeichnet, daß die beiden Rohre (1, 2) oberflächenbehandelt sind.
